# EUROPÄISCHE PATENTSCHRIFT

(11) **EP 0 548 006 B1**
(45) Veröffentlichungstag und Bekanntmachung des Hinweises auf die Patenterteilung: **03.04.1996**
(21) Anmeldenummer: 92810906.5
(22) Anmeldetag: 23.11.1992
(51) Int. Cl.: B23K 26/08

(54) **Laser-Bearbeitungsanlage**
Laser-machining installation
Installation d'usinage au laser

(30) Priorität: 04.12.1991 CH 3560/91
(43) Veröffentlichungstag der Anmeldung: 23.06.1993
(73) Patentinhaber: Bystronic Laser AG, CH-3362 Niederönz (CH)
(72) Erfinder: Zumstein, Ernst, CH-3400 Burgdorf (CH); Hunziker, Urs, CH-4923 Wynau (CH)
(74) Vertreter: AMMANN PATENTANWAELTE AG BERN

(56) Entgegenhaltungen:
- EP-A- 0 321 686
- WO-A-89/11949
- CH-A- 677 332
- US-A- 4 609 807
- PATENT ABSTRACTS OF JAPAN vol. 10, no. 83 (M-466)(2140) 2. April 1986 & JP-A-60 223 692 (FUJISAWA SANGYO K.K.) 8 November 1985

## Beschreibung

Die vorliegende Erfindung betrifft eine Laser-Bearbeitungsanlage mit sogenannter fliegender Optik, d.h. mit einem festen Bearbeitungstisch, über welchem der Bearbeitungskopf in Längs- und Querrichtung verschiebbar ist. Diese Anordnung gestattet eine platzsparende Ausführung, indem grosse Werkstücke, insbesondere Platten, aus welchen einzelne Teile auszuschneiden sind, während der Bearbeitung an derselben Stelle verbleiben.

Ausgehend von einer solchen Anlage liegt der Erfindung die Aufgabe zugrunde, eine besonders vielseitig einsetzbare, dank guter Zugänglichkeit einfach bedienbare und umrüstbare Anlage zu schaffen. Diese Aufgabe wird erfindungsgemäss durch die Merkmale des Anspruchs 1 gelöst. Diese Anlage gestattet die wahlweise Bearbeitung von flachen Werkstücken und von nichtflächigen Profilen, z.B. Rohren. Da keine Längsführungen vorhanden sind, ist der Bearbeitungstisch mindestens von einer Seite gut zugänglich. Bei geeigneter Ausführung der Querführungen und der Schneidbrücke kann auch bei grosser Länge der Brücke bis zu drei Metern eine hohe Präzision erzielt werden. Vorzugsweise kann die Schneidbrücke aus einem stabilen Hohlprofil bestehen. Die erwähnte gute Zugänglichkeit von einer Seite ist besonders vorteilhaft, wenn die Drehachse an dieser Seite angeordnet wird.

Aus der Schrift WO 89/11 949 ist eine Laser-Bearbeitungsmaschine mit Querführungen für eine in Längsrichtung ausgerichtete Schneidbrücke bekannt. Bei dieser Anlage wird keine besondere Zugänglichkeit zur Verbesserung der Bedienbarkeit angestrebt. Es geht vielmehr um eine geeignete Strahlführung von der Laserquelle, die unter dem Bearbeitungstisch angeordnet ist, zum Schneidkopf. Diese Strahlführung erfolgt in einem teleskopartigen Rohr, dessen Länge je nach der Lage der Schneidbrücke variiert.

Aus der CH-A-677,332 ist weiter eine Laser-Bearbeitungsanlage mit einer Drehachsen-Einheit bekannt. Diese Einheit muss jeweils zum Einsatz herangeschwenkt und beim Schneiden von Platten auf dem Schneidtisch weggeschwenkt werden. Die Aufhängung und Führung des Schneidkopfes ist dabei aufwendig.

Voraussetzung für die wahlweise Bearbeitung von flachen Werkstücken und von in einer Drehachse gespannten Profilen ist die Möglichkeit, den Stützrost des Maschinentisches für flache Werkstücke entfernen zu können, um den erforderlichen Raum und die erforderliche Zugänglichkeit für die Bearbeitung von Profilen zu schaffen. Zu diesem Zwecke können entweder zwei Stützröste vorhanden sein, die einzeln oder gemeinsam aus dem Bearbeitungsbereich entfernt werden können, oder aber es können einzeln wegschwenkbare Stützelemente vorgesehen sein.

Da der Bearbeitungstisch üblicherweise nur an einer Längsseite zugänglich ist, können die Sicherheitsanforderungen erfüllt werden, wenn an dieser Längsseite eine wegbewegbare Schutzabdeckung vorgesehen wird. Es erweist sich hierbei als Vorteil, dass an dieser Seite keine Führung und entsprechend kein längs dieser Führung bewegter Teil vorhanden ist.

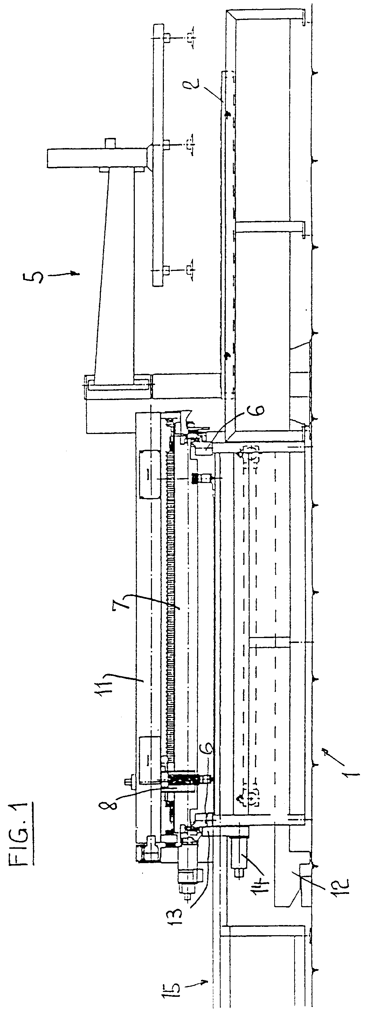

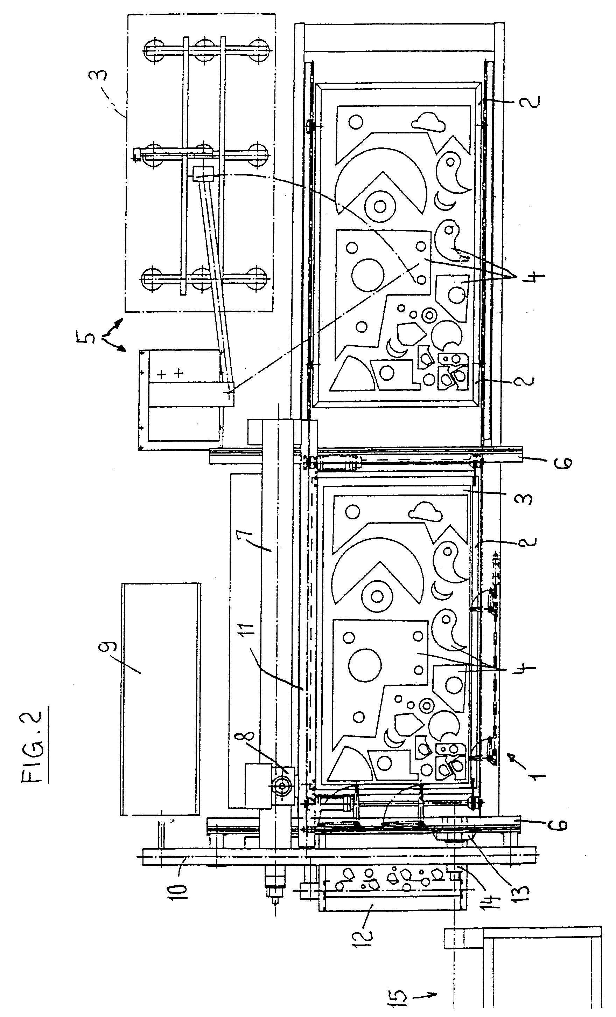

Die Erfindung wird nun anhand zweier in der Zeichnung dargestellter Ausführungsbeispiele näher erläutert.
- Fig. 1: ist eine Seitenansicht der ersten Bearbeitungsanlage,
- Fig. 2: ist eine Draufsicht auf diese Bearbeitungsanlage,
- Fig. 3: ist eine Stirnansicht von links in Fig. 1 und 2,
- Fig. 4: ist eine Teil-Draufsicht auf die Anlage bei entferntem Stützrost und bei Bearbeitung eines Profils,
- Fig. 5: zeigt das Profil der Brücke,
Die in den Fig. 1 - 5 dargestellte Laser-Bearbeitungsanlage weist einen Bearbeitungstisch 1 auf, in dessen oberem Teil sich ein Stützrost befindet, von welchem in Fig. 2 nur der Rahmen 2 nicht aber die Stützrippen dargestellt sind, welche der Abstützung einer Platte 3 bzw. der aus derselben ausgeschnittenen Teile 4 dient. Wie aus den Fig. 1 und 2 ersichtlich, sind zwei Stützroste vorgesehen, welche sich wahlweise entweder in der Bearbeitungsstellung im Tisch 1 oder aber in einer Beschickungs- und Entladestellung rechts ausserhalb des Bearbeitungsbereiches befinden können. Mittels einer Beschickungsvorrichtung 5 kann eine neue Platte 3 auf den in der Beschickungsstellung befindlichen Stützrost 2 aufgebracht werden, nachdem die ausgeschnittenen Teile 4 abgeräumt worden sind. Zugleich kann eine Platte 3 in der Bearbeitungsstellung bearbeitet werden. In an sich bekannter, nicht näher dargestellter und erläuterter Weise können sich die beiden vorhandenen Stützroste 2 übereinander entweder in Bearbeitungsstellung oder in Beschickungsstellung auf unterschiedlichem Niveau befinden.

An den beiden Schmalseiten des Bearbeitungstisches 1 ist je eine Querführung 6 befestigt. Auf diesen beiden Querführungen 6 ist die Schneidbrücke 7 in Querrichtung verschiebbar geführt, und an der Schneidbrücke 7 ist der Schneidkopf 8 in Längsrichtung geführt und verschiebbar. Der Laserstrahl gelangt aus der Laserquelle 9 durch schematisch dargestellte, geschlossene Kanäle mit Faltenbälgen 10 und 11 zum Schneidkopf 8. Unter dem Schneidtisch 1 ist ein Förderband 12 angeordnet, mittels welchem bei der Bearbeitung durch den Stützrost durchfallende Abfälle in der Fig. 2 angedeuteten Weise nach links in dieser Figur weggefördert werden können.

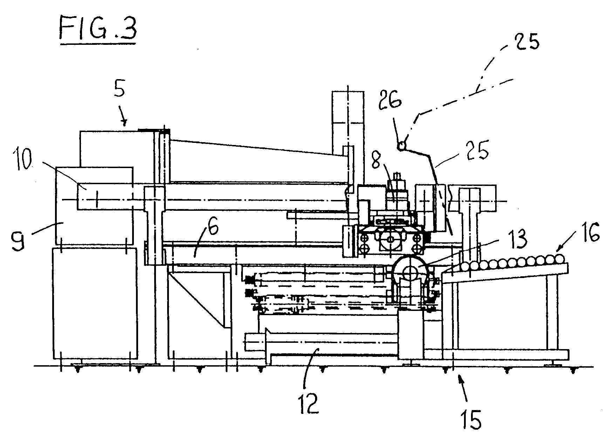

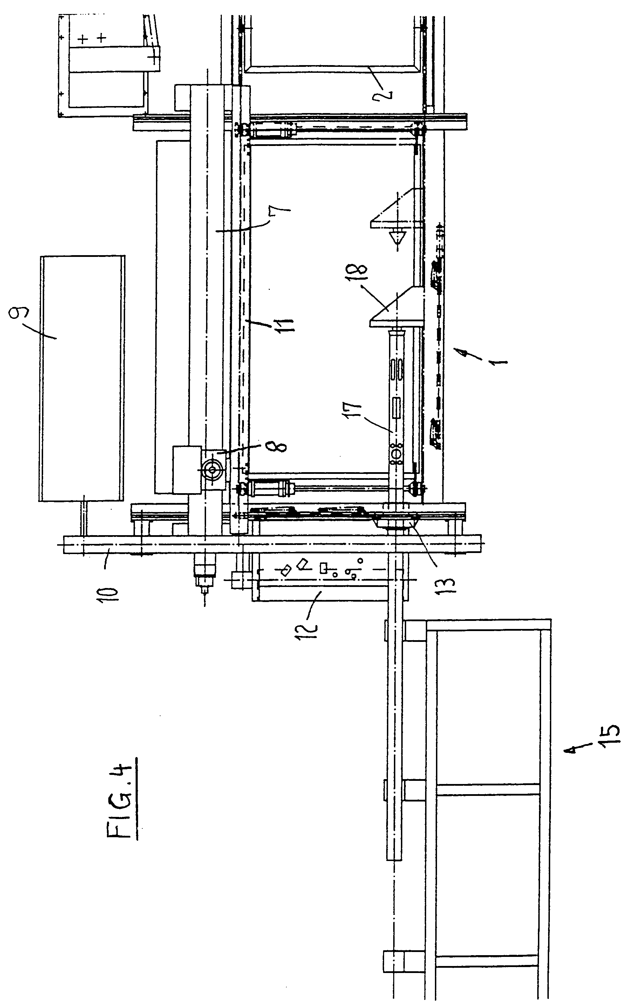

Unterhalb der Fig. 1 und 2 links dargestellten Querführung 6 ist am Gestell des Bearbeitungstisches 1 eine Drehachse 13 gelagert, welche ein drehbares Spannfutter mit durchgehender Bohrung zur Aufnahme von zu bearbeitenden Profilen aufweist. Die Drehachse kann mittels eines Motors 14 gedreht werden. Der Drehachse 13 ist eine Beschickungsvorrichtung 15 vorgelagert, und in Fig. 3 ist angedeutet, dass eine automatische Beschickung aus einem Magazin 16 möglich ist. Fig. 4 zeigt eine Draufsicht auf die Anlage bei in die Beschickungsstelle ausgefahrenen Stützrosten 2, in welchem Falle der Innenraum des Bearbeitungstisches 1 von oben frei zugänglich ist. Im Spannfutter der Drehachse 13 befindet sich ein Rohr oder Profil 17, welches auch mittels eines Reitstocks 18 geführt ist. In Fig. 4 ist ebenfalls angedeutet, wie in das Rohr oder Profil 17 Löcher beliebiger Form geschnitten werden können. Je nach Grösse und Form der Löcher kann zum Schneiden derselben nur der Schneidekopf 8 bewegt oder aber auch das Rohr oder Profil 17 gedreht werden.

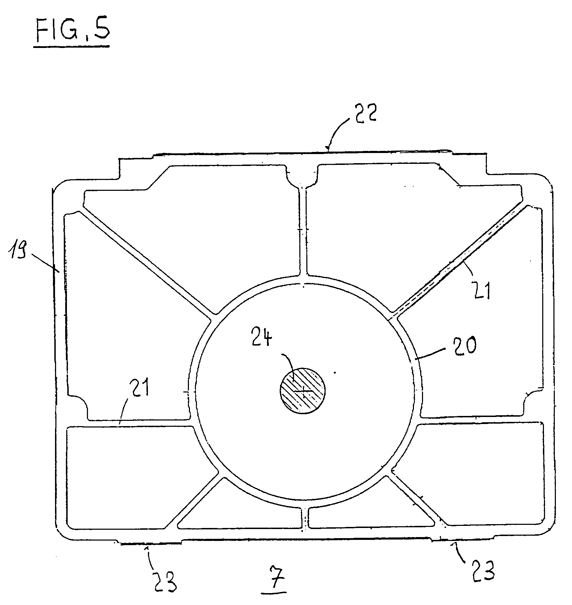

Dem Vorteil, dass mit relativ kurzen, günstig zu bearbeitenden Führungen 6 für die Schneidbrücke 7 auszukommen ist, steht der Nachteil gegenüber, dass die Schneidbrücke 7 bei grossen Anlagen recht lang ausfällt, was Probleme bezüglich Stabilität und Präzision mit sich bringen kann. Diesem Problem wird erfindungsgemäss dadurch begegnet, dass als Schneidbrücke ein sehr stabiles, gezogenens Profil gemäss Fig. 5 aus Aluminium verwendet wird. Dieses Hohlprofil weist einen äusseren Kasten 19 von etwa rechteckigem Querschnitt auf, mit dem ein inneres Rohr 20 durch Rippen 21 verbunden ist. Das Profil 19 weist genau bearbeitete Flächen 22 und 23 auf. Mit dem Profil gemäss Fig. 5 aus Leichtmetall wird bei verhältnismässig geringem Gewicht eine hohe Stabilität erzielt. Das Hohlprofil gemäss Fig. 5 kann dazu dienen, Hilfsaggregate aufzunehmen, beispielsweise eine Antriebs- und Kupplungswelle 24 für die beiden miteinander gekuppelten Antriebe zur Verschiebung der Brücke 7 längs den Führungen 6.

Die Arbeitsweise der dargestellten Bearbeitungsanlage ergibt sich weitgehend aus der vorstehenden Beschreibung. Beim Ausschneiden von flachen Teilen 4 aus Platten 3 befinden sich die Stützröste 2 abwechlungsweise in der Bearbeitungsstellung und in der Beschickungs- und Entladestellung, wobei während der Bearbeitung der einen Platte die vorher auf dem anderen Rost ausgeschnittenen Teile abgeräumt und eine neue Platte 3 in der in Fig. 2 angedeuteten Weise aufgelegt wird. Nach erfolgter Bearbeitung werden die Röste ausgewechselt und es beginnt ein neuer Arbeitszyklus durch Ausschneiden von Teilen, dem Abräumen ausgeschnittener Teile und der Beschickung mit einer neuen Platte 3.

Zur Bearbeitung von Rohren oder Profilen werden beide Stützroste 2 in die Beschickungs- und Entladestelle verschoben und der Reitstock 18 montiert. Dann wird ein Rohr oder Profil 17 von links in Fig. 4 durch das Spannfutter der Drehachse 13 eingeschoben, gespannt und mit dem Reitstock 18 zentriert. Rohre oder Profile grossen Querschnittes können auch von oben eingeführt und in ein Spannfutter der Drehachse eingesetzt werden. Es kann dann die Bearbeitung des Rohres oder Profils erfolgen. Vor allem beim Bearbeiten von Rohren oder Profilen gemäss Fig. 4 ist es wichtig, dass der Innenraum des Bearbeitungstisches von der in Fig. 4 unten liegenden Seite gut zugänglich ist. Das ist in besonderem Masse der Fall, weil an dieser Seite keine Führung vorgesehen ist und weil die Schneidbrücke 7 mit dem Schneidkopf 8 ganz auf die andere Seite verschoben werden kann. Auch die Stützroste 2 sind auf der der Drehachse 13 gegenüberliegenden Seite des Bearbeitungstisches 1 ganz aus dem Bearbeitungsbereich entfernt und behindern in keiner Weise das Einsetzen des Reitstockes 18 und überhaupt das Einrichten der ganzen Anlage für die Bearbeitung von Rohren oder Profilen. Entsprechendes gilt natürlich für jede Umrüstung.

Der guten Zugänglichkeit des Bearbeitungsraumes mindestens von einer Seite steht eine gewisse Gefahr der Verletzung gegenüber, wenn man sich während der Bearbeitung unachtsam der Maschine nähert. Aus diesem Grund kann eine in Fig. 3 schematisch dargestellte Schutzhaube 25 vorgesehen sein, welche z. B. um eine Schwenkachse 26 in die strichpunktiert angedeutete Stellung hochgeschwenkt werden kann, um den Bearbeitungsraum zugänglich zu machen. Es könnte auch ein an der Vorderseite versenkbares Schutzschild vorhanden sein.

In einer Ausführungsvariante könnte anstelle der beiden verschiebbaren Roste 2 ein Rost aus herunterschwenkbaren Stützarmen gemäss EP-0 464 296 vorgesehen sein. Zur Bearbeitung von Rohren oder Profilen können die Stützarme ganz nach unten geschwenkt werden, um den Bearbeitungsraum von oben zugänglich und zum Einführen eines Rohres oder Profiles freizumachen.

## Patentansprüche

1. Laser Bearbeitungsanlage mit einem Bearbeitungstisch (10) mit horizontal angeordnetem Stützrost (2),
mit einer Laserquelle (9) und einem Schneidkopf (8) die optisch miteinander verbundenen sind,
wobei der Schneidkopf (8) mittels einer in Längsrichtung angeordneten und über Querführungen (6) quer verschiebbaren Schneidbrücke (7) beliebig über die Fläche des Bearbeitungstisches (10) verschieblich ist,
dadurch gekennzeichnet,
- dass der Stützrost (2) aus einer Arbeitsstellung in der Anlage in eine andere Stellung ausserhalb des Bearbeitungsbereiches der Anlage bringbar ist, und
- dass unterhalb der Ebene der Querführungen (6) und von einer der Seiten der Anlage frei zugänglich eine drehbare Spannvorrichtung (13, 18) für nichtflächige Profile (17) angeordnet ist.

2. Laser-Bearbeitungsanlage nach Anspruch 1,
dadurch gekennzeichnet,
dass die Spannvorrichtung eine durch einen Motor (14) antreibbare Drehachse (13) mit drehbarem Spannfutter und durchgehender Bohrung umfasst.

3. Laser-Bearbeitungsanlage nach Anspruch 2,
dadurch gekennzeichnet,
dass die Spannvorrichtung weiter einen Reitstock (18) umfasst.

4. Laser-Bearbeitungsanlage nach Anspruch 2,
dadurch gekennzeichnet,
dass die Drehachse (13) unterhalb der einen Querführung (6) angeordnet ist.

5. Laser-Bearbeitungsanlage nach Anspruch 2,
dadurch gekennzeichnet,
dass der Spannvorrichtung (13, 18) eine Beschickungsanlage (15) zugeordnet ist.

6. Laser-Bearbeitungsanlage nach Anspruch 5,
gekennzeichnet durch eine automatische Beschickungsanlage (15) mit Magazin (16).

7. Laser-Bearbeitungsanlage nach Anspruch 1,
dadurch gekennzeichnet,
dass dem Bearbeitungstisch (1) zwei Stützroste (2) zugeordnet sind, die wahlweise in eine Arbeitsstellung und in eine Beschickungs- und Entladestellung ausserhalb des Bearbeitungsbereiches der Anlage verschiebbar sind.

8. Laser-Bearbeitungsanlage nach Anspruch 1,
dadurch gekennzeichnet,
dass dem Bearbeitungstisch (1) ein Stützrost (2) aus herabschwenkbaren Stützarmen zugeordnet ist.

9. Laser-Bearbeitungsanlage nach Anspruch 1,
dadurch gekennzeichnet,
dass die Schneidbrücke (7) aus einem extrudierten Profil (19-21), vorzugsweise einem Leichtmetallprofil mit etwa rechteckigem Querschnitt besteht.

10. Laser-Bearbeitungsanlage nach Anspruch 9,
dadurch gekennzeichnet,
dass in einem inneren Rohr (20) des Profils (19-21) eine Antriebs- und Kupplungswelle (24) für zwei miteinander gekoppelte Antriebe zur Verschiebung der Schneidbrücke längs der Querführungen (6) angeordnet ist.

11. Laser-Bearbeitungsanlage nach Anspruch 1,
dadurch gekennzeichnet,
dass unter dem Bearbeitungstisch (10) ein Förderband (12) zur Entsorgung von Abfällen und/oder ausgeschnittenen Teilen (4) angeordnet ist.

12. Laser-Bearbeitungsanlage nach Anspruch 1,
dadurch gekennzeichnet,
dass an der genannten einen Seite eine wegbewegbare Schutzabdeckung (25) vorgesehen ist.

## Claims

1. Laser machining installation having a working table (10) comprising a horizontally disposed supporting grate (2), as well as a laser source (9) and a cutting head (8) which are optically connected to each other, said cutting head (8) being randomly displaceable across the surface of the working table (10) by means of a cutting bridge (7) which is disposed in the longitudinal direction and transversally displaceable on transversal guidings, characterised in that
- said supporting grate (2) is capable of being moved from a working position in the installation to another position outside the working area of the installation, and in that
- a rotatable clamping device (13, 18) for non-planar profiles (17) is disposed below the plane of the transversal guidings (6) and is freely accessible from one of the sides of the installation.

2. Laser machining installation according to claim 1, characterised in that said clamping device comprises a rotating shaft which is capable of being driven by a motor (14) and has a rotatable clamping chuck and a through-going bore.

3. Laser machining installation according to claim 2, characterised in that said clamping device further comprises a tailstock (18).

4. Laser machining installation according to claim 2, characterised in that the rotating shaft (13) is disposed under one of the transversal guidings (6).

5. Laser machining installation according to claim 2, characterised in that a charging installation is associated to the clamping device (13, 18).

6. Laser machining installation according to claim 5, characterised by an automatic charging installation (15) having a magazine (16).

7. Laser machining installation according to claim 1, characterised in that the working table has two associated supporting grates (2) which are selectively displaceable to a working position and to a charging and discharging position outside the working area of the installation.

8. Laser machining installation according to claim 1, characterised in that the working table (1) has an associated supporting grate (2) consisting of supporting arms which are capable of being lowered.

9. Laser machining installation according to claim 1, characterised in that said cutting bridge (7) consists of an extruded profile (19-21), preferably a light metal profile having an approximately rectangular cross-section.

10. Laser machining installation according to claim 9, characterised in that a driving and coupling shaft (24) for two mutually coupled drives for the displacement of the cutting bridge along the lateral guidings (6) are disposed in an inner tube (20) of said profile (19-21).

11. Laser machining installation according to claim 1, characterised in that a conveyor belt (12) for the disposal of wastes and/or of cut pieces (4) is disposed under said working table (10).

12. Laser machining installation according to claim 1, characterised in that a removable protection cover (25) is provided on the mentioned side.

## Revendications

1. Installation d'usinage par laser, comprenant une table d'usinage (10) ayant une grille de soutien (2) horizontale, ainsi qu'une source de laser (9) et une tête de coupe (8) optiquement reliées, la tête de coupe (8) étant déplaçable a volonté sur la surface de la table d'usinage (10) au moyen d'un pont de coupe (7) disposé en direction longitudinale et déplaçable transversalement par l'intermédiaire de guidages (6) transversaux, caractérisée en ce que
- la grille de soutien (2) est capable d'être amené d'une position d'usinage dans l'installation à une autre position à l'extérieur de la zone d'usinage de l'installation, et en ce que
- un dispositif de serrage (13, 18) rotatif pour profilés non plans (17) est disposé sous le plan desdits guidages transversaux et librement accessible depuis l'un des côtés de l'installation.

2. Installation d'usinage par laser selon la revendication 1, caractérisée en ce que le dispositif de serrage comprend un arbre de rotation (13) capable d'être entraîné par un moteur (14) et présentant un mandrin rotatif et un alésage traversant.

3. Installation d'usinage par laser selon la revendication 2, caractérisée en ce que le dispositif de serrage comprend en plus une contre-poupée (18).

4. Installation d'usinage par laser selon la revendication 2, caractérisée en ce que l'arbre de rotation (13) est disposé sous l'un des guidages lateraux (6).

5. Installation d'usinage par laser selon la revendication 2, caractérisée en ce qu'une installation de chargement (15) est associée au dispositif de serrage (13, 18).

6. Installation d'usinage par laser selon la revendication 5, caractérisée par une installation de chargement automatique (15) avec magasin (16).

7. Installation d'usinage par laser selon la revendication 1, caractérisée en ce que deux grilles de soutien (2) sont associées à la table d'usinage (1) qui sont sélectivement déplaçables dans une position de travail et dans une position de chargement et de décharge à l'extérieur de la zone d'usinage de l'installation.

8. Installation d'usinage par laser selon la revendication 1, caractérisée en ce qu'une grille de soutien (2) constituée de bras de soutien rabattables est associée à la table d'usinage (1).

9. Installation d'usinage par laser selon la revendication 1, caractérisée en ce que le pont de coupe (7) consiste d un profilé extrudé (19-21), préférablement d'un profilé en métal léger de coupe transversale approximativement rectangulaire.

10. Installation d'usinage par laser selon la revendication 9, caractérisée en ce qu'un arbre d'entraînement et d'accouplement (24) pour deux entraînements accouplés pour le déplacement du pont de coupe le long des guidages transversaux (6) est disposé dans un tube intérieur (20) dudit profilé (19-21).

11. Installation d'usinage par laser selon la revendication 1, caractérisée en ce qu'un convoyeur à bande pour l'enlèvement de déchets et/ou de pièces (4) découpées est disposé sous la table d'usinage (10).

12. Installation d'usinage par laser selon la revendication 1, caractérisée en ce qu'un recouvrement protecteur (25) est prévu sur le côté mentionné.
